# EUROPEAN PATENT APPLICATION

(11) **EP 4 644 203 A1**
(43) Date of publication of application: **05.11.2025**
(21) Application number: 23910386.4
(22) Date of filing: 22.12.2023
(51) Int. Cl.: B60W 30/18, B62D 15/02, B62D 1/00

(54) **STEERING CONTROL METHOD, STORAGE MEDIUM, CONTROLLER, DISPLAY TERMINAL, AND VEHICLE**

(30) Priority: 30.12.2022 CN 202211723935
(71) Applicant: BYD Company Limited, Shenzhen, Guangdong 518118 (CN)
(72) Inventor: LIANG, Chizong, Shenzhen, Guangdong 518118 (CN); ZHANG, Jiande, Shenzhen, Guangdong 518118 (CN); WU, Panpan, Shenzhen, Guangdong 518118 (CN)
(74) Representative: Mathys & Squire
(86) International application number: PCT/CN2023/140961
(87) International publication number: WO 2024/140460

(57) **Abstract**

A steering control method for a vehicle (1000) is provided. The method includes: displaying a first virtual vehicle on a display terminal (100); and when a motion trajectory of the first virtual vehicle is obtained, determining first steering information based on the motion trajectory, and sending the first steering information to an execution controller of the vehicle (1000), where the execution controller is configured to control steering of the vehicle (1000) based on the first steering information.

## Description

### CROSS-REFERENCE TO RELATED APPLICATION

The present disclosure claims priority to Chinese Patent Application No. 202211723935.3 filed on December 30, 2022 and entitled "STEERING CONTROL METHOD, STORAGE MEDIUM, CONTROLLER, DISPLAY TERMINAL, AND VEHICLE", which is incorporated herein by reference in its entirety.

### TECHNICAL FIELD

The present disclosure relates to the field of automobile control, and in particular to a steering control method for a vehicle, a storage medium, a controller, a display terminal, and the vehicle.

### BACKGROUND

In a related technology, steering operations of vehicles are complex, placing high demands on driver operations.

### SUMMARY

The present disclosure aims to resolve, at least to some extent, one of the technical problems in the related technology. To this end, a first objective of the present disclosure is to provide a steering control method for a vehicle. The method can enable the vehicle to steer automatically, with simple operation and higher safety.

A second objective of the present disclosure is to provide a steering control method.

A third objective of the present disclosure is to provide a storage medium.

A fourth objective of the present disclosure is to provide a controller.

A fifth objective of the present disclosure is to provide a display terminal.

A sixth objective of the present disclosure is to provide a vehicle. To achieve the foregoing objectives, in an aspect, the present disclosure provides a steering control method for a vehicle, including: displaying a first virtual vehicle on a display terminal; and when a motion trajectory of the first virtual vehicle is obtained, determining first steering information based on the motion trajectory, and sending the first steering information to an execution controller of the vehicle, where the execution controller is configured to control steering of the vehicle based on the first steering information.

The first virtual vehicle is displayed on the display terminal, so that when the first virtual vehicle moves due to external action, and the motion trajectory is obtained, the first steering information is determined based on the motion trajectory, and the first steering information is sent to the execution controller of the vehicle. The execution controller of the vehicle may control the vehicle to steer based on the first steering information, thereby reducing complexity of manual operations when the vehicle steers.

In some embodiments, the first steering information includes a steering angle and a steering direction.

In some embodiments, the vehicle steering information is determined based on a start position and an end position of the motion trajectory, where the start position represents an initial position status of the vehicle, and the end position represents a target position status of the vehicle.

In some embodiments, the control method further includes: when the motion trajectory of the first virtual vehicle is not obtained, obtaining second steering information, and sending the second steering information to the execution controller, where the execution controller is configured to control steering of the vehicle based on the second steering information, and the second steering information includes a steering direction.

In some embodiments, the control method further includes: displaying environmental information of a position at which the vehicle is located on the display terminal.

In some embodiments, when it is determined based on the environmental information that a distance between the first virtual vehicle and a first obstacle is less than a first target distance, first prompt information is issued, where the environmental information includes a position of the first obstacle.

In some embodiments, before displaying the first virtual vehicle on the display terminal, the control method further includes: obtaining a control instruction, and entering an on-the-spot steering mode based on the control instruction.

In some embodiments, before entering the on-the-spot steering mode based on the control instruction, the control method further includes: determining that the control instruction is a driver instruction.

In some embodiments, a second virtual vehicle is displayed on the display terminal, where a position of the second virtual vehicle represents a real-time position status of the vehicle.

In some embodiments, the control method further includes: obtaining a braking instruction, and sending the braking instruction to the execution controller, where the execution controller is configured to brake the vehicle based on the braking instruction.

To achieve the foregoing objectives, in another aspect, the present disclosure provides a steering control method for a vehicle, including: in response to first steering information or second steering information sent by a display terminal, controlling steering of the vehicle based on the first steering information or the second steering information, where the first steering information is determined by the display terminal based on a motion trajectory of a first virtual vehicle on the display terminal; the second steering information is input information obtained by the display terminal; and the first steering information includes a steering angle and a steering direction, and the second steering information includes a steering direction.

In some embodiments, the control method further includes: obtaining acceleration information, and controlling, based on the acceleration information, the vehicle to turn.

In some embodiments, the control method further includes: obtaining braking information, and controlling, based on the braking information, the vehicle to stop turning.

In some embodiments, the control method further includes: determining that there is an obstacle around the vehicle, and issuing second prompt information when a distance between the obstacle and the vehicle is less than a second target distance.

To achieve the foregoing objectives, the present disclosure provides a non-volatile storage medium having a computer program stored thereon. When the computer program is executed by a processor, a vehicle equipped with the storage medium is caused to implement the foregoing steering control method.

To achieve the foregoing objectives, the present disclosure provides a controller, including a memory, a processor, and a computer program stored in the memory and can run on the processor. When the computer program is executed by the processor, a vehicle equipped with the storage medium is caused to implement the foregoing control method.

To achieve the foregoing objectives, the present disclosure provides a display terminal. The display terminal includes the foregoing controller.

To achieve the foregoing objectives, the present disclosure proposes a vehicle. The vehicle includes the foregoing display terminal.

### BRIEF DESCRIPTION OF DRAWINGS

FIG. 1 is a flowchart of a steering control method for a vehicle according to an embodiment of the present disclosure;
FIG. 2 is a flowchart of a steering control method for a vehicle according to another embodiment of the present disclosure;
FIG. 3 is a flowchart of a steering control method for a vehicle according to another embodiment of the present disclosure;
FIG. 4 is a flowchart of a steering control method for a vehicle according to another embodiment of the present disclosure;
FIG. 5 is a diagram of a display terminal according to another embodiment of the present disclosure;
FIG. 6 is a diagram of a display terminal according to another embodiment of the present disclosure;
FIG. 7 is a diagram of a display terminal according to another embodiment of the present disclosure;
FIG. 8 is a diagram of a display terminal according to another embodiment of the present disclosure; and
FIG. 9 is a diagram of a structure of a vehicle according to an embodiment of the present disclosure.

### DESCRIPTION OF EMBODIMENTS

Embodiments of the present disclosure are described in detail below, examples of which are shown in the accompanying drawings, where the same or similar reference numerals represent the same or similar elements or elements having the same or similar functions throughout. Embodiments described below with reference to the accompanying drawings are exemplary and are merely used to explain the present disclosure, and should not be construed as limiting the present disclosure.

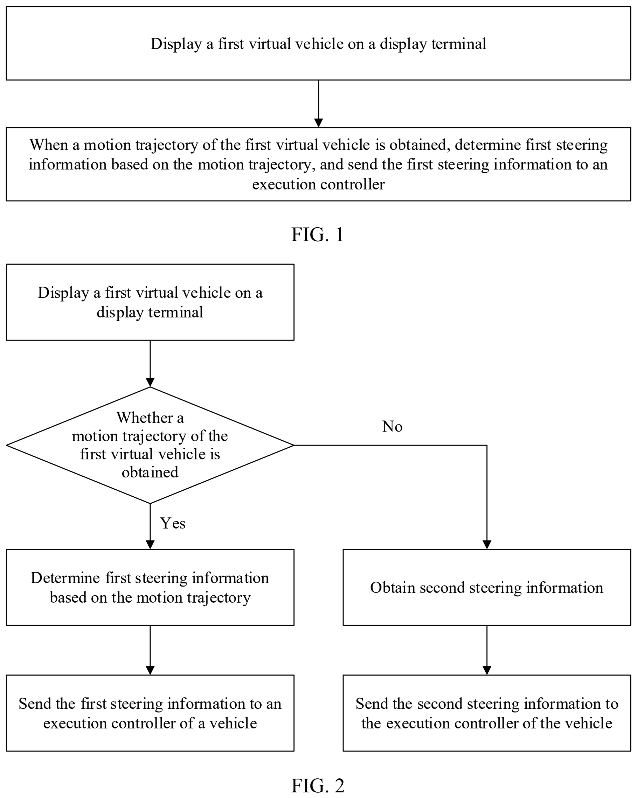

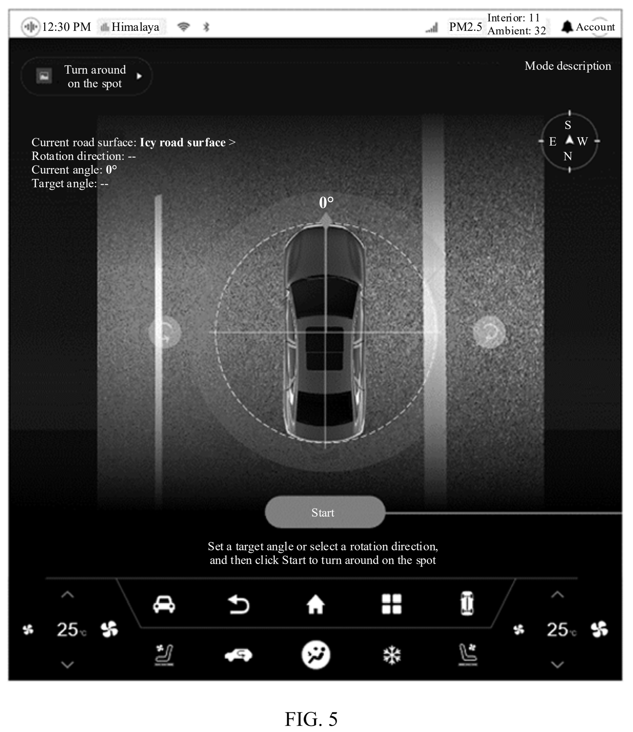

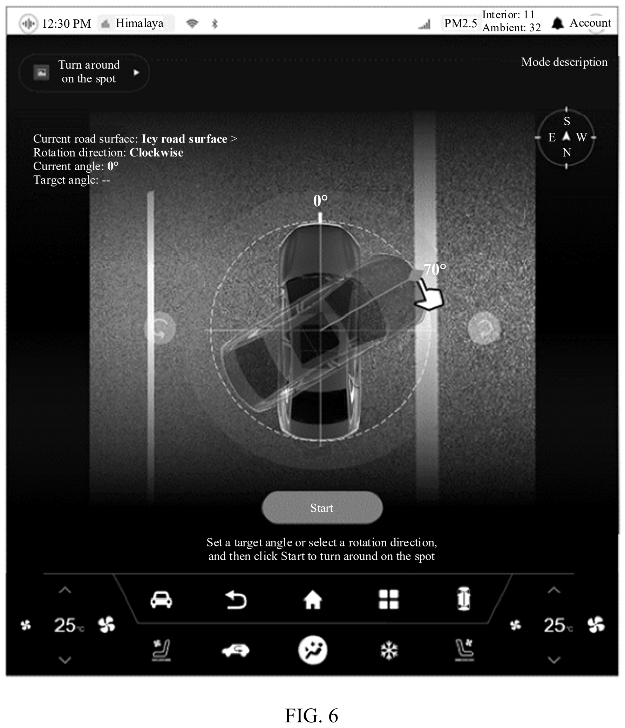

The following describes in detail a steering control method for a vehicle provided in embodiments of the present disclosure with reference to the accompanying drawings. As shown in FIG. 1 to FIG. 9, the steering control method includes: displaying a first virtual vehicle on a display terminal; and when a motion trajectory of the first virtual vehicle is obtained, determining first steering information based on the motion trajectory, and sending the first steering information to an execution controller of the vehicle, where the execution controller is configured to control steering of the vehicle based on the first steering information. The first steering information includes a steering angle and a steering direction, and the vehicle steering information may be determined based on a start position and an end position of the motion trajectory.

As shown in FIG. 1, FIG. 5, and FIG. 6, the steering control method may be applied to the display terminal. The first virtual vehicle is displayed on the display terminal. In this case, if a user drags the first virtual vehicle to move, the display terminal may obtain the motion trajectory of the first virtual vehicle, and the first steering information may be determined based on the motion trajectory. The first steering information includes the steering angle and the steering direction. The display terminal sends the first steering information to the execution controller of the vehicle, and the execution controller of the vehicle may control, based on the first steering information, the vehicle to rotate and perform automatic on-the-spot steering.

It may be understood that the motion trajectory may be formed when the first virtual vehicle turns by a specific angle clockwise or counterclockwise, or may be formed by another movement. As long as the start position and the end position of the motion trajectory are different, a turning direction and a turning angle of the first virtual vehicle in the movement may be obtained based on a difference between the start position and the end position. The turning direction and the turning angle are the steering direction and the steering angle in the first steering information. The vehicle may turn in the steering direction and may turn the steering angle relative to the start position. In this way, turning of the vehicle is controlled through movement of the first virtual vehicle on the display terminal without the need for the user to perform complex procedures such as steering wheel operation.

It may be understood that the start position represents an initial position status of the vehicle, and the end position represents a target position status that the user wants the vehicle to turn to. The first virtual vehicle is derived from the actual vehicle's data and has been scaled down or modified to some extent.

It may be understood that after the first virtual vehicle on the display terminal turns a specific angle, the display terminal sends steering information to the vehicle when the "Start" button on the display terminal is clicked, and the vehicle automatically performs on-the-spot steering after obtaining the information. This eliminates the need for the user to perform a manual steering operation in a complex road surface condition, greatly facilitating the user. On-the-spot steering means that the vehicle steers around its own center as a rotation axis.

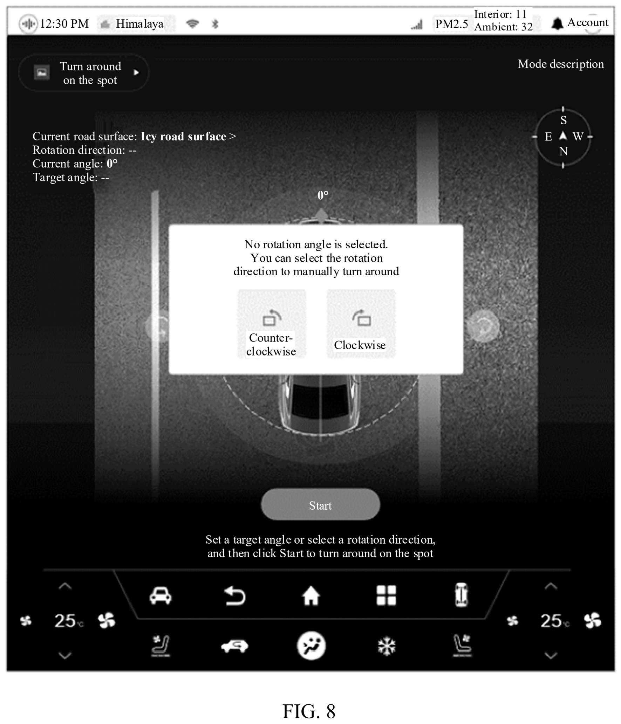

As shown in FIG. 2 and FIG. 8, if the user directly clicks "Start" on the display terminal without setting the steering direction and steering angle in advance by rotating the first virtual vehicle, the display terminal obtains second steering information and sends the second steering information to the execution controller when the motion trajectory of the first virtual vehicle is not obtained. The execution controller is configured to control steering of the vehicle based on the second steering information, and the second steering information includes a steering direction.

In other words, if the user does not set the steering angle or the steering direction in advance, the display terminal may perform the next step based on the obtained second steering information, that is, send the second steering information to the execution controller of the vehicle, so that the vehicle can make a turn or perform on-the-spot steering based on the steering direction contained in the second steering information. It may be understood that the display apparatus may obtain the second steering information by receiving an external voice instruction or information input. For example, when the user clicks "Start" to control the vehicle to turn, the display apparatus prompts the user to input the steering direction when the motion trajectory of the first virtual vehicle is not detected. The user may directly input the steering direction through voice, such as a direct voice command "Turn clockwise", and the display terminal may send the obtained steering information to the vehicle. Alternatively, the display apparatus may display a pop-up window when the motion trajectory of the first virtual vehicle is not detected, allowing the user to choose, through the pop-up window, whether to turn clockwise or counterclockwise. After the user completes selection, the display terminal sends the steering information to the vehicle, and the vehicle completes the turn or performs on-the-spot steering.

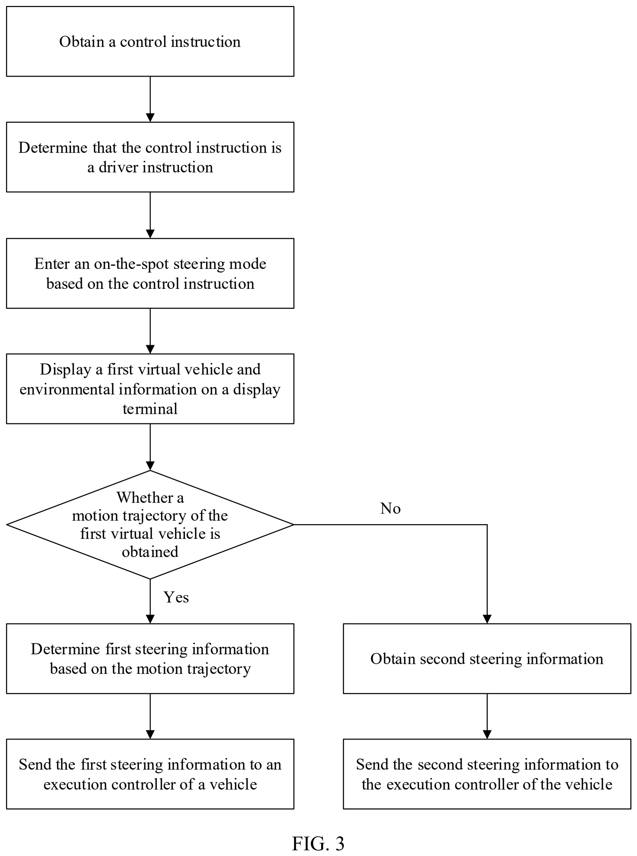

As shown in FIG. 3, in some embodiments, environmental information of a position at which the vehicle is located is displayed on the display terminal. When it is determined based on the environmental information that a distance between the first virtual vehicle and a first obstacle is less than a first target distance, first prompt information is issued, where the environmental information includes a position of the first obstacle.

In some embodiments, before displaying the first virtual vehicle on the display terminal, the control method further includes: obtaining a control instruction, and entering an on-the-spot steering mode based on the control instruction.

In some embodiments, before entering the on-the-spot steering mode based on the control instruction, the control method further includes: determining that the control instruction is a driver instruction.

In some embodiments, the display terminal obtains the control instruction of the user to enter the on-the-spot steering mode. The user may control the display terminal through voice or through another button or another command. After entering the on-the-spot steering mode, the display terminal displays the first virtual vehicle and the environmental information around the vehicle. In this way, the user can easily determine an environment in which the vehicle is located from the display terminal, and further determine a surrounding environment, the optimal steering direction as well as the steering angle. The display terminal may be an in-vehicle display screen on the vehicle or another mobile terminal. When the user drags the first virtual vehicle to rotate to set the steering direction and steering angle, the controller may determine, based on the detected environmental information, whether a collision may occur if the vehicle moves based on the motion trajectory of the first virtual vehicle. If it is determined that a collision may occur, the first prompt information is issued, which may be a pop-up window or an audible alarm, or a high-position collision area displayed by color. This indicates that if the actual vehicle subsequently turns based on the currently set steering direction or steering angle, a collision may occur. Therefore, a warning is issued in advance to prompt the user to change the steering angle and/or the steering direction to avoid the collision in advance. Therefore, setting the steering direction and the steering angle may be understood as advance steering route planning for the vehicle, which may effectively avoid some risks that may arise during actual steering of the vehicle. The first virtual vehicle on the display terminal is obtained by scaling down the actual vehicle, and the display terminal further displays the surrounding environmental information. Therefore, it may be determined that when the distance between the first virtual vehicle and the first obstacle on the display terminal is less than the first target distance, the first prompt information is issued. The first target distance only represents the distance that is between the vehicle and the obstacle and that is displayed on the display terminal, and does not represent an actual distance between the vehicle and the obstacle. The first target distance may be 1 cm or another distance, and the actual distance may be 10 cm.

When the display terminal is the in-vehicle display screen on the vehicle, whether a control instruction is from the driver needs to be determined when obtaining the control instruction. This can effectively prevent the vehicle from misidentifying the control command. If the control instruction is from the driver, the vehicle enters the on-the-spot steering mode. To be specific, the first virtual vehicle and an environmental information image around the vehicle are displayed on the display terminal. The environmental information image may include an obstacle information image, a road image, and the like, to facilitate the user to identify an environmental status around the vehicle. The environmental information image may further include road information, for example, an icy road surface/asphalt road surface/sandy terrain, or other road information. In addition, different road modes may be provided for the user to choose, such as an anti-slip mode suitable for an icy/snowy road surface, a normal mode suitable for an asphalt road surface, a sand escape mode suitable for a sandy terrain. The user may choose different modes based on road conditions to better adapt to road surfaces, thereby realizing optimal vehicle steering.

In some embodiments, whether the control instruction is a driver instruction may be determined by identifying whether the sound is from a direction of a driver, or whether the control instruction is from a display screen in front of the driver. If the sound is from the direction of the driver or from the display screen in front of the driver, it is indicated that the control instruction is the driver instruction. After the user drags the first virtual vehicle to set the steering direction and the steering angle or the user selects the steering direction, the display terminal transmits relevant information to the vehicle. After receiving the relevant information, the vehicle may control the vehicle to rotate.

A second virtual vehicle is further displayed on the display terminal, and a position status of the second virtual vehicle represents a real-time position status of the vehicle. To be specific, when the vehicle is in an initial status, if the steering direction and the steering angle are set through the first virtual vehicle, the initial position statuses of the first virtual vehicle and the second virtual vehicle overlap. After the steering angle and the steering angle are set by controlling the first virtual vehicle to turn, the first virtual vehicle and the second virtual vehicle are arranged at an angle. In this case, the position of the first virtual vehicle represents the target position status of the vehicle, and the second virtual vehicle represents the real-time position status of the vehicle. After the vehicle starts to turn, the second virtual vehicle also starts to turn in response to the actual turning status of the vehicle until the second virtual vehicle overlaps with the first virtual vehicle or is stopped by the user through a braking command. Through the second virtual vehicle, the user can observe the vehicle status more intuitively.

In some embodiments, if the user inputs the steering direction through voice or a pop-up window, only the second virtual vehicle representing the real-time position status of the vehicle is displayed on the display terminal.

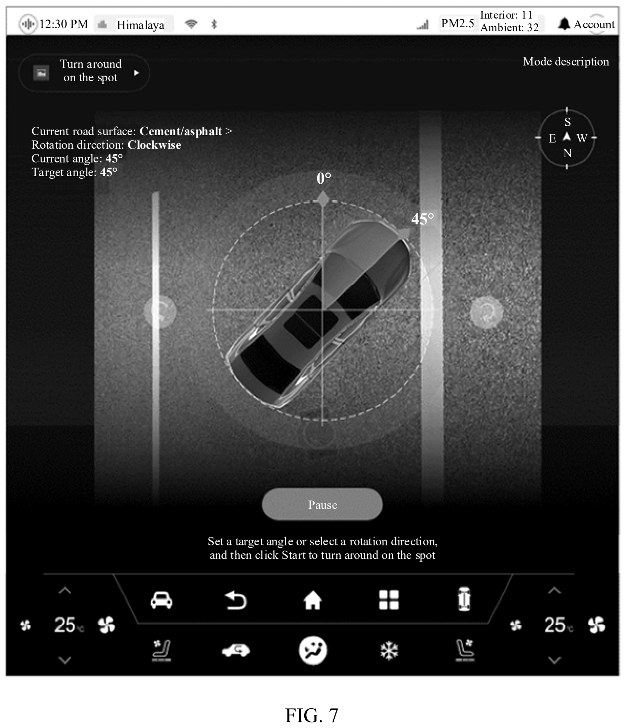

As shown in FIG. 7, in some embodiments, the display terminal may obtain the braking instruction and then send the braking instruction to the execution controller of the vehicle, thereby controlling braking of the vehicle through the execution controller. The execution controller may be a vehicle controller or another controller. The user may input the braking command by clicking "Pause" or "Stop" on the display terminal, or may input the command through voice control. This enables the user to better control steering or a motion status of the vehicle based on the environment around the vehicle or a user need.

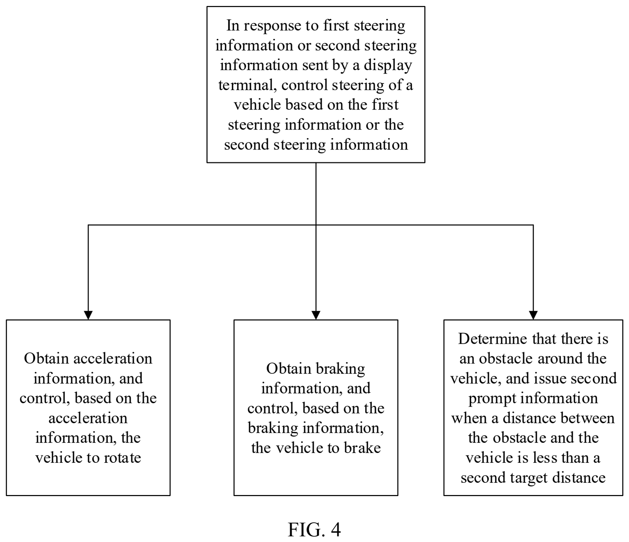

As shown in FIG. 4, in some embodiments, in response to first steering information or second steering information sent by a display terminal, steering of the vehicle is controlled based on the first steering information or the second steering information, where the first steering information is determined by the display terminal based on a motion trajectory of a first virtual vehicle on the display terminal; the second steering information is input information obtained by the display terminal; and the first steering information includes a steering angle and a steering direction, and the second steering information includes a steering direction. The vehicle is controlled to rotate based on obtained acceleration information, and the vehicle is controlled to stop rotating based on obtained braking information.

The steering control method may be applied to the vehicle. To be specific, after the vehicle receives the first steering information or the second steering information sent by the display terminal, the vehicle is controlled to steer. If the user sets the steering direction and the steering angle by rotating the first virtual vehicle, the vehicle is controlled to perform automatic on-the-spot steering after receiving the control information, and automatically rotates the set angle in the set steering direction. Certainly, during turning of the vehicle, the braking command may alternatively be input through a brake pedal/voice command/pause button on the display terminal, to stop turning of the vehicle at any time. If the user inputs the second steering information by selecting a pop-up window on the display terminal, then after the steering direction is selected, the acceleration information is obtained, and the vehicle is controlled, based on the acceleration information, to turn. To be specific, when the user steps on an accelerator pedal, the vehicle starts to perform on-the-spot steering. When the braking information is obtained, the vehicle is controlled, based on the braking information, to stop turning. In other words, when the user steps on the brake pedal or releases an accelerator, the vehicle stops moving.

In the on-the-spot steering mode, after the user sets the steering angle and the steering direction by controlling the first virtual vehicle on the display terminal, a start command is input, and the vehicle starts to perform automatic on-the-spot steering. During this process, the user may step on the accelerator pedal to increase the steering speed as needed. In this case, the speed does not exceed a threshold, such as 10 km/h, to avoid causing discomfort to the user. When the vehicle rotates to the set angle, the vehicle stops automatically or is stopped by the user by inputting the braking command at any time. This process does not require a complex process such as the user operating the steering wheel, thereby enabling convenient steering.

In the on-the-spot steering mode, if the user does not set the steering angle or the steering direction through the first virtual vehicle, when the user inputs a start command, the user is prompted to input the steering direction. For example, a pop-up window is displayed to allow the user to select the steering direction, or the user is prompted to use another input method. After the user completes input, the vehicle may perform automatic steering. Alternatively, the vehicle may start moving after the user steps on the accelerator pedal, and stop moving after the user stops stepping on the accelerator pedal or the brake pedal. This process also does not require a complex process such as the user operating the steering wheel, thereby enabling convenient steering.

It is determined that there is an obstacle around the vehicle. When a distance between the obstacle and the vehicle is less than a second target distance, second prompt information is issued. To be specific, when the vehicle turns on the spot, a radar of the vehicle/a detector of a camera detects surrounding environmental information in real time. If it is determined that the distance between the obstacle and the vehicle is less than the second target distance, the second prompt information is issued, which may be sound, light or vibration information, to prompt the user to intervene in vehicle turning or brake in time. The second target distance may be set as needed, such as set to 20 cm or 50 cm, to effectively prevent danger during the steering process.

An on-the-spot steering function is applied to a four-wheel drive vehicle, which may be either four-wheel independent drive or another drive configuration. When on-the-spot steering is implemented, wheels on two opposite sides are controlled to rotate in opposite directions, thereby achieving on-the-spot steering around a center of the current vehicle as a rotation center. This function allows the vehicle to achieve a small steering radius, approaching zero, so that the vehicle can perform steering in a narrow area.

In some embodiments, a non-volatile storage medium is further included, on which a computer program is stored. When the computer program is executed by a processor, a vehicle equipped with the storage medium is caused to implement the foregoing steering control method applied to a display terminal.

In some embodiments, a controller is further included, which includes a memory, a processor, and a computer program stored in the memory and can run on the processor. When the computer program is executed by the processor, a vehicle equipped with the storage medium is caused to implement the foregoing control method. It may be understood that when the controller is a controller of a display terminal, the controller can implement the control method on the display terminal.

In some embodiments, a display terminal 100 is further included. The display terminal includes the foregoing controller 10.

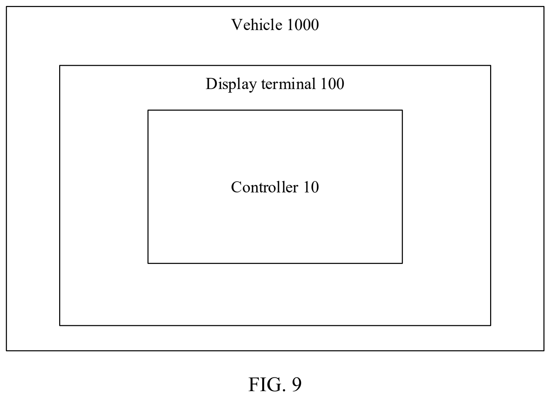

As shown in FIG. 9, in some embodiments, a vehicle 1000 is further included. The vehicle includes the foregoing display terminal 100. The vehicle does not require a complex process such as the user operating a steering wheel, thereby enabling convenient steering.

It may be clearly understood by a person skilled in the art that, for convenient and brief description, for a detailed operating process of the foregoing system and/or apparatus, reference may be made to a corresponding process in the foregoing method embodiments. Details are not described herein again.

## Claims

1. A steering control method for a vehicle, comprising:
displaying a first virtual vehicle on a display terminal; and
when a motion trajectory of the first virtual vehicle is obtained, determining first steering information based on the motion trajectory, and sending the first steering information to an execution controller of the vehicle, wherein
the execution controller is configured to control steering of the vehicle based on the first steering information.

2. The steering control method according to claim 1, wherein the first steering information comprises a steering angle and a steering direction.

3. The steering control method according to claims 1 and 2, wherein the vehicle steering information is determined based on a start position and an end position of the motion trajectory, wherein
the start position represents an initial position status of the vehicle, and the end position represents a target position status of the vehicle.

4. The steering control method according to any one of claims 1 to 3, wherein the control method further comprises:
when the motion trajectory of the first virtual vehicle is not obtained, obtaining second steering information, and sending the second steering information to the execution controller, wherein
the execution controller is configured to control steering of the vehicle based on the second steering information, and the second steering information comprises a steering direction.

5. The control method according to any one of claims 1 to 4, wherein the control method further comprises:
displaying environmental information of a position at which the vehicle is located on the display terminal.

6. The control method according to claim 5, comprising:
when it is determined based on the environmental information that a distance between the first virtual vehicle and a first obstacle is less than a first target distance, issuing first prompt information, wherein
the environmental information comprises a position of the first obstacle.

7. The control method according to any one of claims 1 to 6, wherein before displaying the first virtual vehicle on the display terminal, the control method further comprises:
obtaining a control instruction, and entering an on-the-spot steering mode based on the control instruction.

8. The control method according to claim 7, wherein before entering the on-the-spot steering mode based on the control instruction, the control method further comprises:
determining that the control instruction is a driver instruction.

9. The control method according to any one of claims 1 to 8, comprising:
displaying a second virtual vehicle on the display terminal, wherein
a position of the second virtual vehicle represents a real-time position status of the vehicle.

10. The control method according to any one of claims 1 to 9, wherein the control method further comprises:
obtaining a braking instruction, and sending the braking instruction to the execution controller,
wherein
the execution controller is configured to brake the vehicle based on the braking instruction.

11. A steering control method for a vehicle, comprising:
in response to first steering information or second steering information sent by a display terminal, controlling steering of the vehicle based on the first steering information or the second steering information, wherein
the first steering information is determined by the display terminal based on a motion trajectory of a first virtual vehicle on the display terminal; the second steering information is input information obtained by the display terminal; and the first steering information comprises a steering angle and a steering direction, and the second steering information comprises a steering direction.

12. The steering control method according to claim 11, wherein the control method further comprises:
obtaining acceleration information, and controlling, based on the acceleration information, the vehicle to turn.

13. The steering control method according to claim 11, wherein the control method further comprises:
obtaining braking information, and controlling, based on the braking information, the vehicle to stop turning.

14. The steering control method according to claim 11, wherein the control method further comprises:
determining that there is an obstacle around the vehicle, and issuing second prompt information when a distance between the obstacle and the vehicle is less than a second target distance.

15. A non-volatile storage medium having a computer program stored thereon, wherein when the computer program is executed by a processor, a vehicle equipped with the storage medium is caused to implement the steering control method according to any one of claims 1 to 10 or claims 1 to 14.

16. A controller, comprising a memory, a processor, and a computer program stored in the memory and can run on the processor, wherein when the computer program is executed by the processor, a vehicle equipped with the controller is caused to implement the steering control method according to any one of claims 1 to 10 or claims 1 to 14.

17. A display terminal, comprising the controller according to claim 16.

18. A vehicle, comprising the display terminal according to claim 17.
